# EUROPEAN PATENT SPECIFICATION

(11) **EP 3 708 544 B1**
(45) Date of publication and mention of the grant of the patent: **29.03.2023**
(21) Application number: 18873377.8
(22) Date of filing: 05.11.2018
(51) Int. Cl.: C02F 1/469, B01D 61/42, H02N 11/00, F03G 7/04, C02F 103/08, B01D 61/50, C02F 1/46, H01M 8/22, B01D 61/58, B01D 61/52

(54) **HYBRID POWER GENERATION APPARATUS CAPABLE OF ELECTRICITY PRODUCTION AND DEIONIZATION SIMULTANEOUSLY**
VORRICHTUNG ZUR ERZEUGUNG VON HYBRIDENERGIE MIT GLEICHZEITIGEN ELEKTRIZITÄTSERZEUGUNG UND ENTIONISIERUNG
APPAREIL DE GÉNÉRATION D'ÉNERGIE HYBRIDE PERMETTANT DE PRODUIRE SIMULTANÉMENT DE L'ÉLECTRICITÉ ET DE LA DÉIONISATION

(30) Priority: 06.11.2017 KR 20170146556; 06.11.2017 KR 20170146555
(43) Date of publication of application: 16.09.2020
(73) Proprietor: Korea Institute of Energy Research, Daejeon 34129 (KR)
(72) Inventor: KIM, Han Ki, Jeju-si Jeju-do 63226 (KR); JEONG, Nam Jo, Jeju-si Jeju-do 63101 (KR); HWANG, Kyo Sik, Jeju-si Jeju-do 63326 (KR); YANG, Seung Cheol, Jeju-si Jeju-do 63303 (KR); NAM, Joo Youn, Jeju-si Jeju-do 63229 (KR); CHOI, Ji Yeon, Jeju-si Jeju-do 63357 (KR); PARK, Soon Chul, Jeju-si Jeju-do 63357 (KR); SEO, Yong Seog, Daejeon 34120 (KR)
(74) Representative: Murgitroyd & Company
(86) International application number: PCT/KR2018/013309
(87) International publication number: WO 2019/088782

(56) References cited:
- WO-A1-2011/050473
- JP-A- 2004 073 978
- JP-A- 2014 168 758
- KR-A- 20160 114 319
- KR-A- 20170 052 739
- US-A1- 2011 068 008
- US-A1- 2015 274 555
- US-A1- 2015 357 651
- US-A1- 2017 072 361
- JANDE, Y. A. C. et al.: "Integrating Reverse Electrodialysis with Constant Current Operating Capacitive Deionization", Journal of Environmental Management, vol. 146, 2014, pages 463-469, XP029064899,
- JANDE, Y. A. C. et al.: "Simultaneous Production of Freshwater and Energy from Saline Water Using Hybrid Capacitive Deionization-reverse Electrodialysis", International Journal of Research in Chemical, Metallurgical and Civil Engineering, vol. 1, no. 1, 2014, pages 35-40, XP55612664,

## Description

### [Technical Field]

The present invention relates to a hybrid power generation apparatus capable of simultaneously generating electricity and performing deionization, and more specifically, to a hybrid power generation apparatus, which is an integrated apparatus in conjunction with reverse electrodialysis (RED), capacitive deionization (CDI), and electrodialysis (ED), capable of consecutively performing salinity gradient power generation and seawater desalination.

### [Background Art]

Reverse electrodialysis (RED) is the recovery of salinity gradient energy or concentration difference energy, which is generated during a process of mixing two fluids having different concentrations, e.g., seawater and fresh water, in the form of electrical energy.

More specifically, an RED is a system for generating power using a salinity gradient between seawater and fresh water and is an apparatus in which ions move through ion exchange membranes (a cation exchange membrane and an anion exchange membrane) due to a concentration difference between seawater and fresh water to generate a potential difference between electrodes (a positive electrode and a negative electrode) at both ends of a stack in which a plurality of ion exchange membranes are alternately arranged, and electric energy is generated on the electrodes through an oxidation-reduction reaction.

That is, the RED apparatus is a power generation apparatus employing a power generation method in which chemical energy generated as ions dissolved in seawater (salt water) move to fresh water is directly converted into electrical energy and which has less energy loss when compared with the existing power generation methods such as a thermoelectric power generation method, a hydroelectric power generation method, and a nuclear power generation method.

Meanwhile, a capacitive deionization (CDI) process is a technique of removing ions using an adsorption reaction of ions due to electrical attraction which is generated in an electric double layer formed on an electrode surface when a potential is applied to the electrode.

More specifically, when an electrode potential ranging from 1 to 2 volts (V) is applied, the CDI process removes ionic substances from influent water using an adsorption reaction in the electric double layer formed on a surface of the electrode. When the adsorbed ions reach capacitance of the electrode, the CDI process converts the electrode potential to 0 V or an opposite potential to desorb the adsorbed ions, thereby regenerating the electrode.

Such a CDI process operates at a low electrode potential (about 1 to 2 V) such that energy consumption thereof is significantly lower than that of other deionization techniques. Therefore, the CDI process is evaluated as next generation deionization technology with low energy consumption.

However, since the CDI process necessarily requires a desorption process of regenerating the electrode when the ions reach the capacitance of the electrode, a consecutive operations of the CDI process is not possible.

Further, many porous carbon electrodes are used as electrodes in the CDI process. In this case, owing to a rapid variation in potential of the electrode, ions adsorbed on the electrode and ions having opposite charges move to the electric double layer so that all the ions adsorbed on pores cannot be desorbed and can remain on the surface of the electrode. Consequently, there is a problem of reducing adsorption efficiency of the electrode.

These technologies are currently being published in various research reports and papers as new renewable energy sources. However, a connection system has not been reported which is capable of consecutively desalinating seawater or brackish water using electrochemical potential energy, which is generated during an operation of an RED device, in an operation of the CDI.

Meanwhile, an electrodialysis (ED) process is a membrane separation process in which an ionic material is separated from chemical components dissolved in water using an ion exchange membrane which selectively transmits an electrolyte (cations or anions) having an electrical property when an electric potential is applied to an electrode.

More specifically, electric power is applied to an electrode so that cations or anions dissolved in water move to corresponding electrodes. Thus, a deionization compartment in which an ion concentration decreases and a concentration compartment in which an ion concentration increases are alternately formed.

However, such a deionization process using the ED has a disadvantage of consuming energy because power should be applied to the electrodes.

These technologies are currently being published in various research reports and papers as new renewable energy sources. However, a connection system has not been reported which is capable of consecutively desalinating seawater or brackish water using electrochemical potential energy, which is generated during an operation of an RED device, in an operation of the ED. WO 2011/050473, US 2011/068008, US 2015/274555 and US 2015/357651 disclose a combined system where the electricity generated by reverse electrodialysis (RED) of saline solutions is used for desalination of said solutions simultaneously.

### [Disclosure]

### [Technical Problem]

The present invention is directed to providing a hybrid power generation apparatus capable of simultaneously consecutively generating electricity and performing deionization for a desalination of seawater or brackish water using electrochemical potential energy, which is generated during an operation of reverse electrodialysis (RED) device, in an operation of capacitive deionization (CDI).

### [Technical Solution]

The present invention provides a hybrid power generation apparatus according to claim 1.

One or more among salt water, seawater, brackish water, and a mixed solution including one or more thereof are supplied to the space portion, and, when the potential difference is applied to the space portion, deionization is performed.

The space portion may include the one or more flow channels comparted by a cation exchange membrane and an anion exchange membrane, the solution may flow in each of two adjacent flow channels, and when the potential difference is applied to the space portion, the deionization may be performed in one flow channel of the two adjacent flow channels and enrichment may be performed in the other flow channel thereof.

At least one of the first RED part and the second RED part and the space portion are connected such that a solution flowing in the flow channel is supplied to at least one of the first RED part and the second RED part or are provided such that a solution discharged from at least one of the first RED part and the second RED part is supplied to the flow channel.

The second electrode and the third electrode may be provided to have the same polarity or different polarities.

When the solution discharged from at least one of the first RED part and the second RED part flows in the flow channel and the potential difference is applied to the space portion, the deionization may be performed.

In the space portion, an ion exchange membrane is disposed adjacent to each of facing surfaces of the second electrode and the third electrode.

The facing surfaces of the second electrode and the third electrode may include porous electrode portions.

The facing surfaces of the second electrode and the third electrode may be made of a different material from that of surfaces thereof opposite the facing surfaces.

The deionized solution and the enriched solution may be supplied to at least one of the first RED part and the second RED part.

The facing surfaces of the second electrode and the third electrode may be made of a different material from that of the surfaces thereof opposite the facing surfaces.

The first electrode and the second electrode may be connected via a first resistor, the third electrode and the fourth electrode may be connected via a second resistor, and at least one of the first resistor and the second resistor may be provided to be adjustable in size.

The flow channel is provided such that a flowing solution comes into contact with the facing surfaces of the second electrode and the third electrode.

The first RED part and the second RED part may be respectively provided as a plurality of first RED parts and a plurality of second RED parts to be arranged.

Another aspect of the present invention provides a hybrid power generation apparatus including a carbon dioxide collector configured to collect carbon dioxide using a carbon dioxide absorbent and including an absorbent passage through which the absorbent absorbing the carbon dioxide is discharged, and the above-described hybrid power generation apparatus (according to claim 1), wherein the absorbent passage, the first RED part, and the second RED are connected such that a fluid is flowable so as to supply the absorbent absorbing the carbon dioxide to at least one of the first RED part and the second RED part.

It may also be provided a hybrid power generation method including supplying a high concentration solution and a low concentration solution to the above-described first and second RED parts (according to claim 1), and supplying one or more among salt water, seawater, brackish water, and a mixed solution including one or more thereof to the flow channel of the space portion.

More specifically, a hybrid power generation apparatus according to a first embodiment of the present invention includes a first power generation part including a first electrode, a second electrode electrically connected to the first electrode, and a plurality of first ion exchange membranes disposed between the first electrode and the second electrode and configured to partition passages of a first high concentration solution and a first low concentration solution, a second power generation part including a third electrode located to be spaced a predetermined interval from the second electrode, a fourth electrode electrically connected to the third electrode, and a plurality of second ion exchange membranes disposed between the third electrode and the fourth electrode and configured to partition passages of a second high concentration solution and a second low concentration solution, and a deionization part located between the second electrode and the third electrode and having a deionization passage for allowing a third high concentration solution to flow.

The deionization passage may be defined as a space between facing surfaces of the second electrode and the third electrode.

When the third high concentration solution flows, the deionization passage may be provided such that the third high concentration solution comes into contact with the facing surfaces of the second electrode and the third electrode.

When the third high concentration solution flows, an ionic material of the third high concentration solution may move to the facing surfaces of the second electrode and the third electrode.

The first electrode may be a first anode electrode, the second electrode may be a first cathode electrode, the third electrode may be a second anode electrode, and the fourth electrode may be a second cathode electrode.

The ionic material may include a cationic material and an anionic material, the cationic material may move by passing through the first cathode electrode, and the anionic material may move by passing through the second anode electrode.

The deionization part may further include a cation exchange membrane and an anion exchange membrane which are disposed between the second electrode and the third electrode.

The facing surfaces of the second electrode and the third electrode may be porous.

Two surfaces of each of the second electrode and the third electrode, which face the power generation part and the deionization part, may be formed of different materials.

The two surfaces of each of the second electrode and the third electrode, which face the power generation part and the deionization part, may have different characteristics.

The second electrode and the third electrode may include porous electrodes.

The porous electrode may include one or more structure selected from the group consisting of foam, mesh, a sponge, felt, cloth, activated carbon, graphene, carbon nanotubes, carbon nanofibers, a carbon sphere, and a combination thereof.

The porous electrode may include one or more current collectors selected from the group consisting of titanium (Ti), stainless steel (SUS), copper (Cu), nickel (Ni), and an alloy thereof.

The porous electrode may include a composite in which a structure and a current collector are integrally formed.

The hybrid power generation apparatus may further include a first supply for supplying brackish water or fresh water to the first and second low concentration solution passages.

The hybrid power generation apparatus may further include a second supply for supplying salt water, seawater, brackish water, and a mixed solution including one or more thereof to the first and second high concentration solution passages.

The hybrid power generation apparatus may further include a third supply for supplying seawater, brackish water, and a mixed solution including one or more thereof to the deionization passage.

The hybrid power generation apparatus may further include first and second passages for supplying a discharge solution discharged from the passage of the first high concentration solution or the passage of the second high concentration solution to the deionization passage.

The first power generation part and the second power generation part may be respectively provided as a plurality of first power generation parts and a plurality of second power generation parts to be arranged.

The second electrode may be electrically connected to the third electrode.

The second electrode may be electrically connected to the first electrode via a first resistor, and the first resistor may be provided to be adjustable in size.

The fourth electrode may be electrically connected to the third electrode via a second resistor, and the second resistor may be provided to be adjustable in size.

Yet another aspect of the present invention provides a hybrid power generation apparatus including a carbon dioxide collector configured to collect carbon dioxide using a carbon dioxide absorbent and including an absorbent passage through which the absorbent absorbing the carbon dioxide is discharged, and the above-described hybrid power generation apparatus, wherein the absorbent passage and first and second high concentration solution passages are connected such that a fluid is flowable so as to supply the absorbent absorbing the carbon dioxide to the first and second high concentration solution passages.

It may also be provided a hybrid power generation method including supplying a high concentration solution and a low concentration solution to the first and second high concentration solution passages and the first and second low concentration solution passages of the above-described first and second power generation parts, and supplying a third high concentration solution to a deionization passage of a deionization part.

More specifically, a hybrid power generation apparatus according to a second embodiment of the present invention includes a first power generation part including a first anode electrode, a first cathode electrode electrically connected to the first anode electrode, and a plurality of first ion exchange membranes disposed between the first anode electrode and the first cathode electrode and configured to partition passages of a first high concentration solution and a first low concentration solution, a second power generation part including a second anode electrode located to be spaced a predetermined interval from the first cathode electrode, a second cathode electrode electrically connected to the second anode electrode, and a plurality of second ion exchange membranes disposed between the second anode electrode and the second cathode electrode and configured to partition passages of a second high concentration solution and a second low concentration solution, and a separation part defined as a space between facing surfaces of the first cathode electrode and the second anode electrode and having one or more deionization passages and one or more enrichment passages such that a third high concentration solution flows therein.

The separation part may include a plurality of third ion exchange membranes for partitioning the deionization passage and the enrichment passage.

When the low concentration solution and the high concentration solution flow in the first and second low concentration solution passages and the first and second high concentration solution passages, the low concentration solution and the high concentration solution may pass through the first and second ion exchange membranes and thus the first power generation part and the second power generation part may generate electricity at the first and second anode electrodes and the first and second cathode electrodes due to a concentration difference between the low concentration solution and the high concentration solution.

Owing to the electricity generated at the first cathode electrode and the second anode electrode, an ionic material of the third high concentration solution may move to the first cathode electrode and the second anode electrode and thus deionization and enrichment may be performed in the deionization passage and the enrichment passage.

Two surfaces of each of the first cathode electrode and the second anode electrode, which face the power generation part and the separation part, may be formed of different materials.

The hybrid power generation apparatus may further include a first supply for supplying one or more of brackish water and fresh water to the first and second low concentration solution passages.

The hybrid power generation apparatus may further include a second supply for supplying one or more among salt water, seawater, brackish water, and a mixed solution including one or more thereof to the first and second high concentration solution passages.

The hybrid power generation apparatus may further include a third supply for supplying one or more among salt water, seawater, brackish water, and a mixed solution including one or more thereof to the deionization passage and the enrichment passage.

The hybrid power generation apparatus may further include first and second passages for supplying discharge solutions, which are discharged from the deionization passage and the enrichment passage, to the first and second low concentration solution passages or the first and second high concentration solution passages.

The first power generation part and the second power generation part may be respectively provided as a plurality of first power generation parts and a plurality of second power generation parts to be arranged.

The first cathode electrode may be electrochemically connected to the second anode electrode.

The first cathode electrode may be electrically connected to the first anode electrode via a first resistor, and the first resistor may be provided to be adjustable in size.

The second cathode electrode may be electrically connected to the second anode electrode via a second resistor, and the second resistor may be provided to be adjustable in size.

Yet another aspect of the present invention provides a hybrid power generation apparatus including a carbon dioxide collector configured to collect carbon dioxide using a carbon dioxide absorbent and including an absorbent passage through which the absorbent absorbing the carbon dioxide is discharged, and the above-described hybrid power generation apparatus (according to claim 1), wherein the absorbent passage and first and second high concentration solution passages are connected such that a fluid is flowable so as to supply the absorbent absorbing the carbon dioxide to the first and second high concentration solution passages of the hybrid power generation apparatus.

It may also be provided a hybrid power generation method including supplying a high concentration solution and a low concentration solution to the first and second high concentration solution passages and the first and second low concentration solution passages of the above-described first and second power generation parts (according to claim 1), and supplying a high concentration solution to a deionization passage and an enrichment passage of a separation part.

### [Advantageous Effects]

In accordance with a hybrid power generation apparatus according to the present invention, first and second reverse electrodialysis (RED) parts (first and second power generation parts) generate energy. In this case, the generated energy is used in a space portion (a deionization part and/or a separation part) so that an effect of consecutively producing fresh water can be obtained through electrochemical deionization of seawater and brackish water without using additional energy.

Further, the fresh water produced in the space portion (the deionization part and/or the separation part) can be used not only as drinking water but also as other types of living water, and the fresh water and enriched water can be reused as a low concentration solution and a high concentration solution in the first and second RED parts (the first and second power generation parts). Consequently, efficiency of the hybrid power generation apparatus can be improved.

Further, since an electrical circuit of each of the cathode electrodes and the anode electrodes for generating electricity is independently connected, even when a problem occurs in a part of the hybrid power generation apparatus, a consecutive operations can be maintained and, simultaneously, maintenance can be easy.

### [Description of Drawings]

FIGS. 1 to 7 are configurational diagrams and schematic diagrams of a hybrid power generation apparatus according to a first embodiment of the present invention.

FIGS. 8 to 13 are configurational diagrams and schematic diagrams of a hybrid power generation apparatus according to a second embodiment of the present invention.

FIGS. 14 and 15 are graphs showing a current intensity and a power density in a hybrid power generation apparatus according to one embodiment of the present invention.

### [Modes of the Invention]

Hereinafter, exemplary embodiments of the present invention will be described in detail with reference to the accompanying drawings. Prior to describing the present invention, terms or words used herein and the appended claims should not be construed to be limited to ordinary or dictionary meanings, and, these should be construed in accordance with the meaning and concept consistent with the present invention according to the appended claims.

Further, irrespective of reference numerals, the same or corresponding components will be given the same or similar reference numerals, and a duplicate description thereof will be omitted. For convenience of description, a size and a shape of each illustrated component will be exaggerated or reduced.

Therefore, the embodiments described in this disclosure and the configurations illustrated in the drawings are merely the most exemplary embodiments of the present invention.

A hybrid power generation apparatus of the present invention generates electricity using a concentration difference between solutions. The hybrid power generation apparatus includes a first reverse electrodialysis (RED) part 100 including a first electrode 101 and a second electrode 102 electrically connected to the first electrode, and a second RED part 200 which generates electricity using a concentration difference between solutions and includes a third electrode 201 facing the second electrode 102 and disposed to form a space portion between the third electrode 201 and the second electrode 102 and a fourth electrode 202 electrically connected to the third electrode 201. The space portion has one or more flow channels through which a fluid may flow, and, when the first RED part 100 and the second RED part 200 generate electricity, the first RED part 100 and the second RED part 200 are disposed such that a potential difference caused by the second electrode 102 and the third electrode 201 is applied to the space portion.

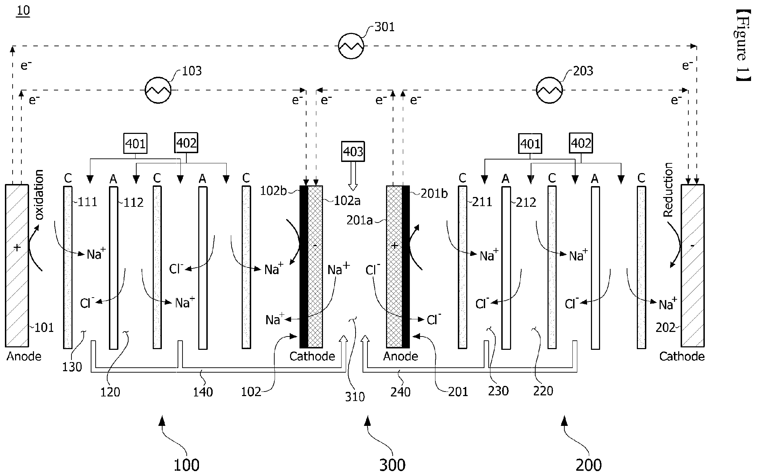

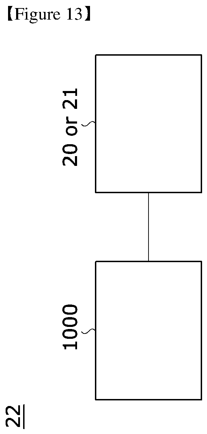

Hereinafter, hybrid power generation apparatuses 10, 11, and 12 according to a first embodiment of the present invention, and hybrid power generation apparatuses 20, 21, and 22 according to a second embodiment of the present invention will be described in detail with reference to FIGS. 1 to 13.

Here, the first and second RED parts may mean first and second power generation parts 100 and 200, a solution may mean a low concentration solution or a high concentration solution, and the space portion and the flow channel may mean a deionization part and a deionization passage in the first embodiment, which will be described below, and may mean a separation part, a deionization passage, and an enrichment passage in the second embodiment.

First, according to the water quality classification based on a salt concentration of United States Geological Survey, "salt water" or "seawater" may generally mean a solution having a salt concentration of 35,000 mg/L or more that is a salt (mainly NaCl) concentration of seawater. The term "brackish water" may mean a solution having a salt concentration ranging from about 1,000 to 10,000 mg/L, and the term "fresh water" may mean a solution having a salt concentration ranging from 0 to 1,000 mg/L.

In this disclosure, first and second low concentration solutions mean low concentration solutions which are introduced for concentration difference or salinity gradient power generation.

In particular, the first and second low concentration solutions may be brackish water or fresh water.

Further, first and second high concentration solutions mean high concentration solutions which are introduced for concentration difference or salinity gradient power generation.

In particular, the first and second high concentration solutions may be salt water, seawater, brackish water, or a mixed solution including one or more thereof.

Further, a third high concentration solution means a high concentration solution introduced for deionization or desalination.

In particular, the third high concentration solution may be a discharge solution which is discharged from the first power generation part 100 or the second power generation part 200, which will be described below, salt water, seawater, brackish water, or a mixed solution including one or more thereof.

Here, the low concentration solution and the high concentration solution may include a first discharge solution and a second discharge solution which are discharged from the separation part which will be described below.

Further, for convenience of description, in this disclosure, spacers and gaskets which are generally disposed between ion exchange membranes so as to maintain intervals between internal passages are omitted.

The first embodiment of the present invention relates to a hybrid power generation apparatus capable of simultaneously generating electricity and performing deionization, and more specifically, to a hybrid power generation apparatus which is capable of consecutively performing salinity gradient power generation and seawater desalination using RED and capacitive deionization (CDI) simultaneously.

In accordance with the hybrid power generation apparatus 10 according to the first exemplary embodiment of the present invention, first and second power generation parts generate energy. In this case, the energy is used in a deionization part so that an effect of consecutively producing fresh water can be obtained through electrochemical deionization of seawater and brackish water without using additional energy.

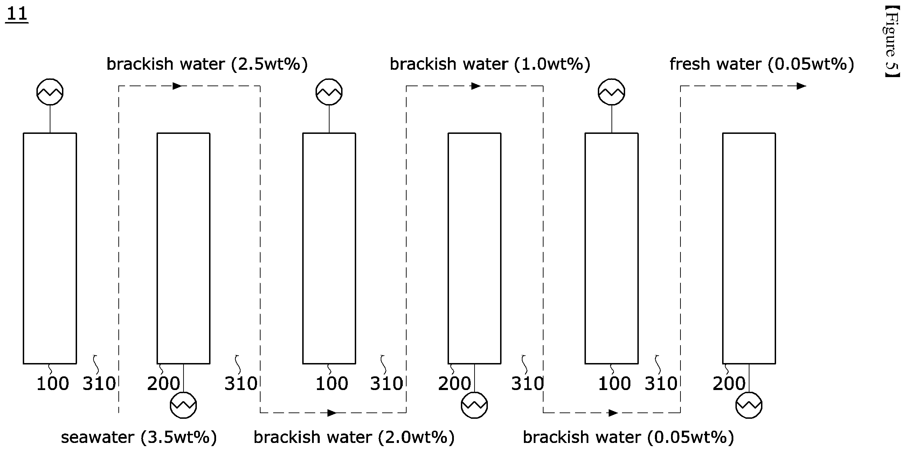

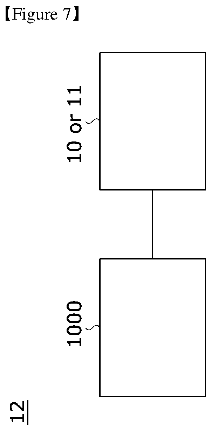

FIGS. 1 to 4 are configurational diagrams illustrating the hybrid power generation apparatus according to the first embodiment of the present invention, and FIGS. 5 and 7 are schematic diagrams illustrating the hybrid power generation apparatus according to the first embodiment of the present invention.

Hereinafter, the hybrid power generation apparatus 10 according to the first embodiment of the present invention will be described in detail with reference to FIGS. 1 to 7.

As shown in FIG. 1, the hybrid power generation apparatus 10 according to the first embodiment of the present invention includes the first power generation part 100, the second power generation part 200, and a deionization part 300.

The first power generation part 100 of the present invention includes a first electrode 101, a second electrode 102 electrically connected to the first electrode 101, and a plurality of first ion exchange membranes 110 disposed between the first electrode 101 and the second electrode 102 and configured to partition passages of a first high concentration solution and a first low concentration solution.

Further, the second power generation part 200 of the present invention includes a third electrode 201 located to be spaced a predetermined interval from the second electrode 102, a fourth electrode 202 electrically connected to the third electrode 201, and a plurality of second ion exchange membranes 210 disposed between the third electrode 201 and the fourth electrode 202 and configured to partition passages of a second high concentration solution and a second low concentration solution.

Further, the deionization part 300 of the present invention may include a deionization passage 310 which is located between the second electrode 102 and the third electrode 201 and through which a third high concentration solution flows.

In this disclosure, an example in which the first electrode is a first anode electrode, the second electrode is a first cathode electrode, the third electrode is a second anode electrode, and the fourth electrode is a second cathode electrode will be described below.

The first power generation part 100 of the present invention includes a first anode electrode 101, a first cathode electrode 102 electrically connected to the first anode electrode 101, and the plurality of first ion exchange membranes 110 disposed between the first anode electrode 101 and the first cathode electrode 102 and configured to partition passages of a first high concentration solution and a first low concentration solution.

Here, each of the first ion exchange membranes 110 includes a plurality of cation exchange membranes 111 and a plurality of anion exchange membranes 112.

More specifically, a first high concentration solution passage 120 and a first low concentration solution passage 130 may be partitioned by the cation exchange membrane 111 and the anion exchange membrane 112 disposed between the first anode electrode 101 and the first cathode electrode 102 which are disposed to be spaced a predetermined interval from each other.

A high concentration solution and a low concentration solution may respectively flow in the first high concentration solution passage 120 and the first low concentration solution passage 130.

Further, the second power generation part 200 of the present invention includes a second anode electrode 201, a second cathode electrode 202 electrically connected to the second anode electrode 201, and the plurality of second ion exchange membranes 210 disposed between the second anode electrode 201 and the second cathode electrode 202 and configured to partition passages of a second high concentration solution and a second low concentration solution.

Here, each of the second ion exchange membranes 210 includes a plurality of cation exchange membranes 211 and a plurality of anion exchange membranes 212.

More specifically, a second high concentration solution passage 220 and a second low concentration solution passage 230 may be partitioned by the cation exchange membrane 211 and the anion exchange membrane 212 disposed between the second anode electrode 201 and the second cathode electrode 202 which are disposed to be spaced a predetermined interval from each other.

A high concentration solution and a low concentration solution may respectively flow in the second high concentration solution passage 220 and the second low concentration solution passage 230.

In the first power generation part 100 and the second power generation part 200, when a high concentration solution and a low concentration solution respectively flow through the high concentration solution passages 120 and 220 and the low concentration solution passages 130 and 230, electricity may be generated at the first and second anode electrodes 101 and 201 and the first and second cathode electrodes 102 and 202 due to a difference in concentration between the high concentration solution and the low concentration solution which pass through the first ion exchange membrane 110 and the second ion exchange membrane 210.

In particular, an electrode solution supplied to generate electricity in the first and second power generation parts 100 and 200 may include an electrolyte and any one of the low concentration solution and the high concentration solution. Preferably, electrode solutions on second surfaces 102b and 201b of the first cathode electrode 102 and the second anode electrode 201 forming the deionization passage 310 of the deionization part 300, which will be described below, also include an electrolyte and use fresh water, pure water, or an electrolytic solution having high ion conductivity.

Here, in the electrode solutions on the second surfaces 102b and 201b of the first cathode electrode 102 and the second anode electrode 201 forming the deionization passage 310, when fresh water or pure ware having a low concentration is supplied, an ionic material moving from the deionization part 300 to the power generation parts may move more easily due to a diffusion phenomenon.

Further, the deionization part 300 of the present invention includes the deionization passage 310 which is disposed between the first cathode electrode 102 and the second anode electrode 201 and through which the third high concentration solution flows.

In particular, the deionization part 300 performs a deionization process using electricity generated in the first and second power generation parts 100 and 200.

Here, the first cathode electrode 102 and the second anode electrode 201 respectively include first surfaces 102a and 201a and the second surfaces 102b and 201b.

The deionization passage 310 of the present invention may be defined as a space between facing surfaces 102a and 201a of the first cathode electrode 102 and the second anode electrode 201.

Here, the facing surfaces mean the first surface 102a of the first cathode electrode and the first surface 201a of the second anode electrode.

That is, the deionization passage 310 may be defined as a space between the first surface 102a of the first cathode electrode and the first surface 201a of the second anode electrode.

More specifically, when the third high concentration solution flows, the deionization passage 310 may be provided such that the third high concentration solution comes into contact with the facing surfaces 102a and 201a of the first cathode electrode 102 and the second anode electrode 201.

Thus, when the third high concentration solution flows, the deionization passage 310 may be provided such that the third high concentration solution comes into contact with the first surface 102a of the first cathode electrode and the first surface 201a of the second anode electrode.

Further, when the third high concentration solution flows, an ionic material of the third high concentration solution may move toward the facing surfaces 102a and 201a of the first cathode electrode 102 and the second anode electrode 201.

Here, the ionic material may include a cationic material and an anionic material.

Further, the cationic material may pass through the first cathode electrode 102 to move, and the anionic material may pass through the second anode electrode 201 to move.

In particular, the ionic material is a dissolved material including salt contained in the third high concentration solution. For example, the cationic material may be a sodium ion (Na⁺), and the anionic material may be a chlorine ion (Cl⁻), but the present invention is not limited thereto.

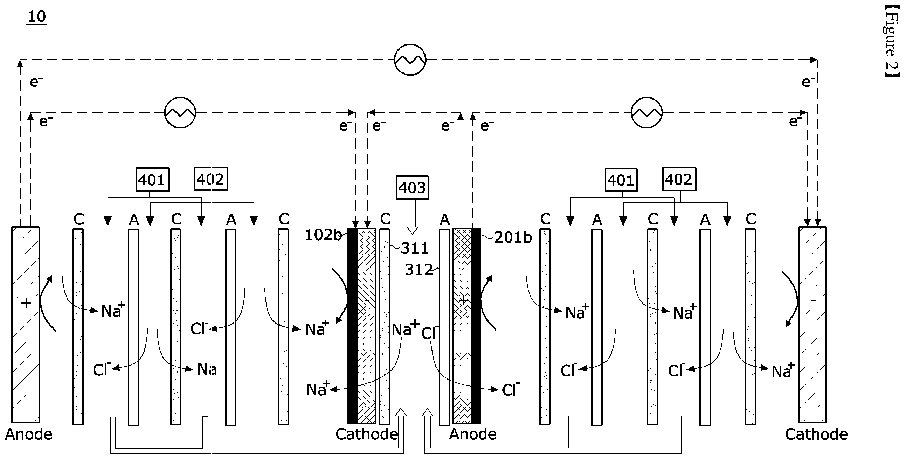

Referring to FIG. 2, the deionization part 300 may further include a cation exchange membrane 311 and an anion exchange membrane 312 which are disposed between the first cathode electrode 102 and the second anode electrode 201.

As described above, the cation exchange membrane 311 and the anion exchange membrane 312 are disposed in the deionization part 300 to increase selectivity of the ionic material contained in the third high concentration solution which passes through the deionization part to move to the first cathode electrode 102 and the second anode electrode 201. Thus, electrical efficiency and deionization efficiency may be simultaneously improved.

The facing surfaces 102a and 201a of the first cathode electrode 102 and the second anode electrode 201 may be porous.

That is, the first surface 102a of the first cathode electrode and the first surface 201a of the second anode electrode may be formed to be porous.

Thus, the third high concentration solution flowing through the deionization passage 310 moves to the first surfaces 102a and 201a formed to be porous due to electricity generated from the first and second power generation parts 100 and 200 such that the deionization process may be performed.

Further, two surfaces of each of the first cathode electrode 102 and the second anode electrode 201, which face the power generation part and the deionization part, may be formed of different materials.

Here, the first surface 102a of the first cathode electrode 102 faces the deionization part 300, and the second surface 102b thereof faces the power generation part, i.e., the first power generation part 100.

Further, the first surface 201a of the second anode electrode 201 faces the deionization part 300, and the second surface 201b thereof faces the power generation part, i.e., the second power generation part 200.

More specifically, in the first cathode electrode 102, the second surface 102b facing the first power generation part 100 and the first surface 102a facing the deionization part 300 may be formed of different materials.

Further, in the second anode electrode 201, the second surface 201b facing the second power generation part 200 and the first surface 201a facing the deionization part 300 may be formed of different materials.

Thus, the first surfaces 102a and 201a and the second surfaces 102b and 201b of the first cathode electrode 102 and the second anode electrode 201 may be formed of different materials.

Meanwhile, the first cathode electrode 102 and the second anode electrode 201 of the present invention may include porous electrodes.

More specifically, the porous electrode may include a structure and a current collector.

For example, the structure of the porous electrode may include one or more selected from the group consisting of foam, mesh, a sponge, felt, cloth, activated carbon, graphene, carbon nanotubes, carbon nanofibers, a carbon sphere, and a combination thereof, but the present invention is not limited thereto.

Further, the current collector of the porous electrode may include one or more selected from the group consisting of titanium (Ti), stainless steel (SUS), copper (Cu), nickel (Ni), and an alloy thereof, but the present invention is not limited thereto.

Alternatively, the porous electrode may be formed of a composite in which a structure and a current collector are integrally formed.

For example, when activated carbon is used as a structure of the porous electrode and Ti is used as a current collector of the porous electrode, pulverized Ti particles or a Ti powder is applied on a porous carbon electrode using the activated carbon or is electrochemically combined with the porous carbon electrode to integrally form the structure and the current collector, and thus the porous electrode may be implemented as a composite.

Here, as an example, although the activated carbon and Ti are used, one or more of the above-described structures and current collectors may be used.

At least some portion of the first surfaces 102a and 201a of the first cathode electrode and the second anode electrode may be the above-described structure, and at least some portion of the second surfaces 102b and 201b thereof may be the above-described current collector.

Meanwhile, the present invention may further include a first supplier 401 for supplying discharge water, brackish water, fresh water, and a mixed solution including one or more thereof to the first and second low concentration solution passages 130 and 230.

Further, the present invention may further include a second supplier 402 for supplying seawater, brackish water, and a mixed solution including one or more thereof to the first and second high concentration solution passages 120 and 220.

Further, the present invention may further include a third supplier 403 for supplying seawater, brackish water, and a mixed solution including one or more thereof to the deionization passage 310.

In particular, the present invention may further include first and second passages 140 and 240 for supplying a discharge solution discharged from the first high concentration solution passage 120 or the second high concentration solution passage 220 to the deionization passage 310.

Here, when a high concentration solution and a low concentration solution flow through the plurality of first high concentration and first low concentration solution passages 120 and 130 and the second high concentration and second low concentration solution passages 220 and 230, the discharge solution means solutions discharged from the first and second high concentration solution passages 120 and 220 after electricity is generated from the first anode electrode 101, the first cathode electrode 102, the second anode electrode 201, and the second cathode electrode 202 due to a concentration difference while the high concentration solution and the low concentration solution pass through the cation exchange membranes 111 and 211 and the anion exchange membranes 112 and 212.

That is, since ions of the introduced high concentration solution pass through the ion exchange membrane to move to the low concentration solution, the discharge solution may be a diluted high concentration solution having a concentration that is lower than that of the introduced high concentration solution.

The diluted high concentration solution having a concentration that is lower than that of seawater is transferred to the deionization part and then deionized such that an effect of improving efficiency of desalination can be obtained.

For example, when seawater is introduced as a high concentration solution and discharge water is introduced as a low concentration solution, the introduced seawater is discharged as brackish water having a concentration of about 2.5 wt%, and, when the brackish water is transferred to and deionized in the deionization part, fresh water may be produced.

In this case, the discharge water used as the low concentration solution may be discharged as brackish water having a concentration of about 1.0 wt%.

Further, although not shown in the drawings, the deionized solution passing through the deionization passage 310 may be transferred to the first and second low concentration solution passages 130 and 230 of the first and second power generation parts to be reused for electricity generation.

Meanwhile, the first cathode electrode 102 and the second anode electrode 201 of the present invention may be electrically connected.

Further, the first cathode electrode 102 may be electrically connected to the first anode electrode 101 via a first resistor 103, and the first resistor 103 may be provided to be adjustable in size.

Further, the second cathode electrode 202 may be electrically connected to the second anode electrode 201 via a second resistor 203, and the second resistor 203 may be provided to be adjustable in size.

In particular, the first anode electrode 101 may also be electrically connected to the second cathode electrode 202 via a third resistor 301.

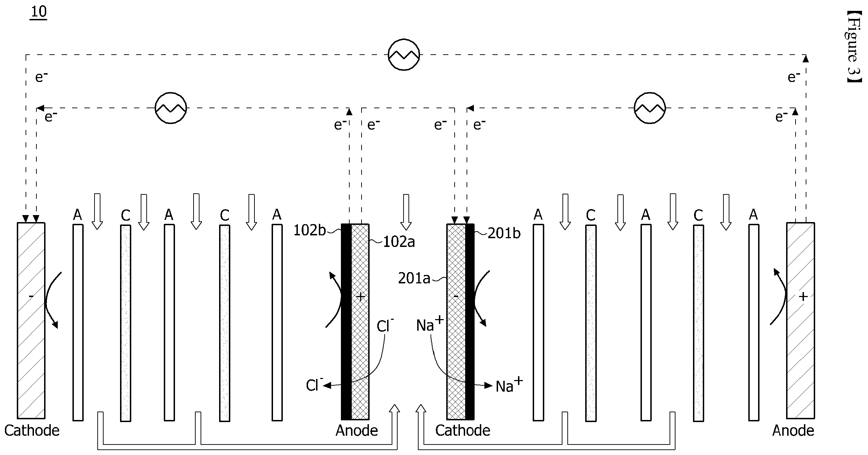

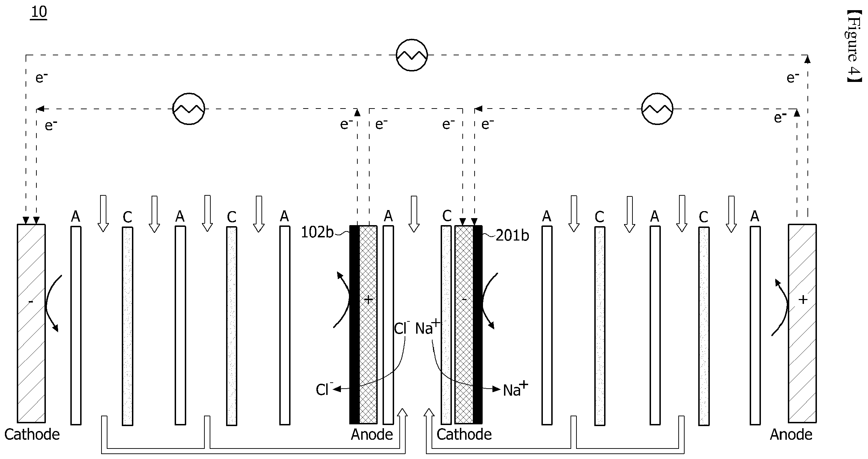

As shown in FIGS. 3 and 4, the hybrid power generation apparatus 10 having the above configuration may include a form in which the cathode electrodes and the anode electrodes are inverted. In this case, an arrangement of the cation exchange membranes and the anion exchange membranes disposed between the cathode electrodes and the anode electrodes may also be appropriately changed.

Meanwhile, a process of simultaneously generating electricity and performing deionization using the hybrid power generation apparatus 10 having the above-described configuration will be described below.

In the following description, an example in which the first and second low concentration solutions and the first to third high concentration solutions are supplied from the corresponding suppliers will be described, However, as described above, the low concentration solution or the high concentration solution may be supplied using the first to third passages appropriately.

First, referring to FIG. 1 again, when the low concentration solution and the high concentration solution are introduced into the first and second power generation parts 100 and 200 through the first and second suppliers 401 and 402, a potential difference is generated due to a concentration difference between the low concentration solution and the high concentration solution.

Thus, a flow of electrons occurs in the first and second anode electrodes 101 and 201 and the first and second cathode electrodes 102 and 202.

The flow of the electrons means that a potential is applied to the deionization passage 310 which is defined as a space between the facing surfaces of the first cathode electrode 102 and the second anode electrode 201.

Accordingly, owing to the applied potential, an ionic material in the third high concentration solution flowing through the deionization passage 310 moves to the facing surfaces of the first cathode electrode 102 and the second anode electrode 201.

In this case, the moving ionic material passes through the first cathode electrode 102 and the second anode electrode 201 to move to the power generation parts.

Here, a portion of the ionic material may pass through the electrodes 102 and 201, and the remaining portion thereof may be adsorbed on the electrodes 102 and 201.

As described above, since the first cathode electrode 102 and the second anode electrode 201 include porous electrodes having a porous structure, the ionic material may be adsorbed on the electrodes 102 and 201. Consequently, a deionization process, i.e., a desalination process, may be performed.

Since the deionization part 300 of the hybrid power generation apparatus 10 configured as described above does not require an electrode for deionization, an effect of implementing a more compact apparatus can be obtained.

Further, since the potential applied to the deionization part 300 is electricity generated in the first and second power generation parts 100 and 200, an effect of producing fresh water can be obtained without using additional energy.

Further, the anode electrodes and the cathode electrodes may be electrically connected via the first to third resistors 103, 203, and 301 to implement an independent electric circuit.

Therefore, since the potential applied to the deionization part 300 may be consecutively supplied, the deionization process may be consecutively maintained and, simultaneously, parts such as the ion exchange membrane and the like requiring maintenance may be partially replaced without stopping the operation of the deionization part 300.

In particular, since the first to third resistors 103, 203, and 301 are adjustable in size, resistance values of the first to third resistors 103, 203, and 301 are adjusted according to concentrations of the low concentration solution and the high concentration solution which are supplied to the hybrid power generation apparatus 10 such that an operating condition may be varied.

For example, when a concentration of the third high concentration solution supplied to the deionization part 300 is high, resistance values of the first resistor 103 and the second resistor 203 may be increased so as to increase electrical energy transferred to the deionization part 300.

Consequently, a movement speed of the ionic material contained in the third high concentration solution increases so that desalination may be performed rapidly.

Meanwhile, the present invention provides the hybrid power generation apparatus 11 according to another example of the first embodiment in which a plurality of first and second power generation parts 100 and 200 described above, are arranged. The hybrid power generation apparatus 11 may further improve efficiency of deionization.

That is, the hybrid power generation apparatus 11 according to the first another embodiment of the present invention may further improve efficiency of deionization by arranging the plurality of first and second power generation parts 100 and 200 which are described above.

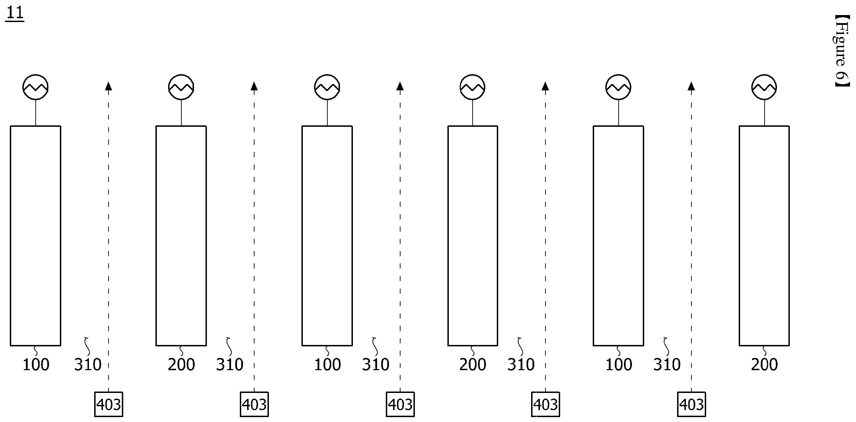

Referring to FIGS. 5 and 6, the plurality of first power generation parts 100 and the plurality of second power generation parts 200 may be alternately arranged.

That is, the first power generation part 100 and the second power generation part 200 may be sequentially arranged, and then the first power generation part 100 and the second power generation part 200 may be sequentially arranged again.

In this case, when each deionization passage 310 is connected such that a fluid flows, an desalination effect may be improved.

For example, as shown in FIG. 5, when about 3.5 wt% seawater is supplied to the deionization passage 310 of the deionization part 300, since the supplied seawater passes a plurality of times through the deionization passages 310 which are connected such that a fluid may flow, deionization may be repeatedly performed to finally produce about 0.05 wt% fresh water.

Further, as shown in FIG. 6, the third supplier 403 is connected to each deionization passage 310 so that a large amount of fresh water may be produced.

In particular, the above-described first and second passages 140 and 240 are appropriately connected to the deionization passage 310 so that a large amount of fresh water may be produced.

In the hybrid power generation apparatus 11 according to the first another embodiment of the present invention, which is described above, when the plurality of first and second power generation parts 100 and 200 are alternately arranged, except for the power generation parts 100 and 200 which are disposed at two final end portions, a plurality of electrodes disposed between the two final end portions may be formed of porous electrodes.

Meanwhile, the hybrid power generation apparatus 12 according to still another example of the first embodiment of the present invention includes a carbon dioxide collector 1000 configured to collect carbon dioxide using a carbon dioxide absorbent and including an absorbent passage through which the absorbent absorbing the carbon dioxide is discharged.

Alternatively, the present invention includes the above-described hybrid power generation apparatus 10 or 11 and is implemented such that the absorbent passage and the first and second high concentration solution passages are connected such that a fluid flows so as to supply the absorbent absorbing carbon dioxide to the first and second high concentration solution passages of the hybrid power generation apparatus.

For example, the absorbent absorbing carbon dioxide may be a product generated through carbon dioxide absorption using an absorbent during a carbon capture storage (CCS) collection process.

Such a reaction may be expressed by the following Reaction Formula 1.

[Reaction Formula 1] Abs(absorbent)(aq) + CO₂(g) ↔ Abs⁺(aq) + HCO₃⁻(aq)

Carbonates (HCO₃⁻) contained in the absorbent move by passing through the anion exchange membranes in the first and second power generation parts of the hybrid power generation apparatus, and hydrogen (H⁺) ions move by passing through the cation exchange membranes to generate a potential difference such that electricity may be generated. Here, the hydrogen (H⁺) ions may be present in water (H₂O) included in a solvent of the absorbent.

It may also be provided a hybrid power generation method.

For example, the hybrid power generation method relates to a power generation method through the above-described hybrid power generation apparatuses 10, 11, and 12 according to the first embodiment.

Therefore, the above-described content may be equally applied to details of the hybrid power generation apparatus, which will be described below.

The hybrid power generation method includes supplying the high concentration solution and the low concentration solution to the first and second high concentration solution passages and the first and second low concentration solution passages of the first and second power generation parts according to the hybrid power generation apparatus.

The hybrid power generation method includes supplying the third high concentration solution to the deionization passage of the deionization part.

Meanwhile, a second embodiment of the present invention relates to the hybrid power generation apparatus 20 capable of simultaneously generating electricity and performing deionization, and more specifically, to a hybrid power generation apparatus which is capable of consecutively performing salinity gradient power generation and seawater desalination using RED and ED simultaneously.

In accordance with the hybrid power generation apparatus 20 according to the second exemplary embodiment of the present invention, first and second power generation parts generate energy. In this case, the generated energy is used in a separation part so that an effect of consecutively producing fresh water can be obtained through electrochemical deionization of seawater and brackish water without using additional energy.

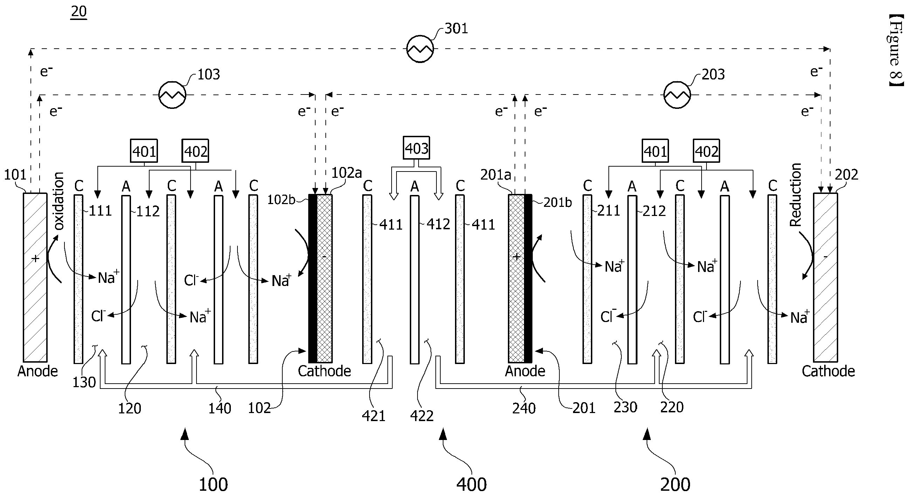

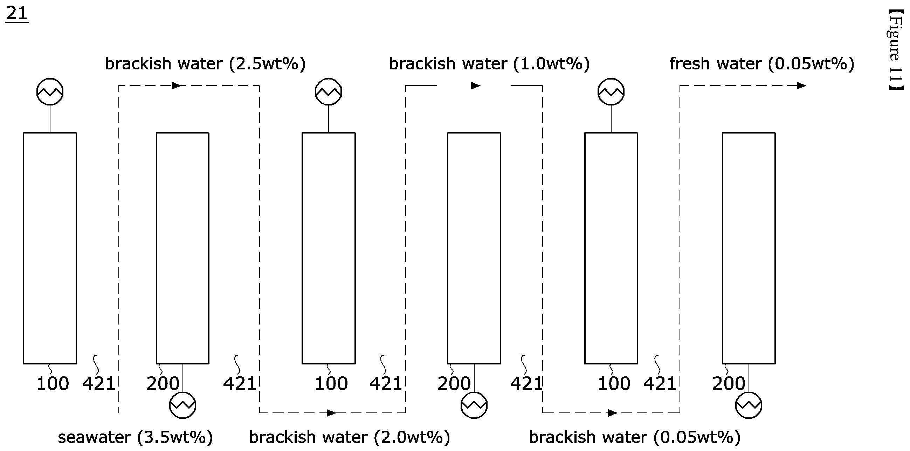

FIGS. 8 to 10 are configurational diagrams illustrating the hybrid power generation apparatus according to the second embodiment of the present invention, and FIGS. 11 to 13 are schematic diagrams illustrating the hybrid power generation apparatus according to the second embodiment of the present invention.

Hereinafter, the hybrid power generation apparatus 20 according to the second embodiment of the present invention will be described in detail with reference to FIGS. 8 to 13.

In particular, in the hybrid power generation apparatus 20 according to the second embodiment, the same reference numerals are assigned to the same components as those of the hybrid power generation apparatuses 10, 11, and 12 according to the first embodiment.

As shown in FIG. 8, the hybrid power generation apparatus 20 according to the second embodiment of the present invention includes a first power generation part 100, a second power generation part 200, and a separation part 400.

The first power generation part 100 of the present invention includes a first anode electrode 101, a first cathode electrode 102 electrically connected to the first anode electrode 101, and a plurality of first ion exchange membranes 110 disposed between the first anode electrode 101 and the first cathode electrode 102 and configured to partition passages of a first high concentration solution and a first low concentration solution.

Here, each of the first ion exchange membranes 110 includes a plurality of cation exchange membranes 111 and a plurality of anion exchange membranes 112.

More specifically, a first high concentration solution passage 120 and a first low concentration solution passage 130 may be partitioned by the cation exchange membrane 111 and the anion exchange membrane 112 disposed between the first anode electrode 101 and the first cathode electrode 102 which are disposed to be spaced a predetermined interval from each other.

A high concentration solution and a low concentration solution may respectively flow in the first high concentration solution passage 120 and the first low concentration solution passage 130.

Further, the second power generation part 200 of the present invention includes a second anode electrode 201, a second cathode electrode 202 electrically connected to the second anode electrode 201, and a plurality of second ion exchange membranes 210 disposed between the second anode electrode 201 and the second cathode electrode 202 and configured to partition passages of a second high concentration solution and a second low concentration solution.

Here, each of the second ion exchange membranes 210 includes a plurality of cation exchange membranes 211 and a plurality of anion exchange membranes 212.

More specifically, a second high concentration solution passage 220 and a second low concentration solution passage 230 may be partitioned by the cation exchange membrane 211 and the anion exchange membrane 212 disposed between the second anode electrode 201 and the second cathode electrode 202 which are disposed to be spaced a predetermined interval from each other.

A high concentration solution and a low concentration solution may respectively flow in the second high concentration solution passage 220 and the second low concentration solution passage 230.

In the first power generation part 100 and the second power generation part 200, when a high concentration solution and a low concentration solution respectively flow through the high concentration solution passages 120 and 220 and the low concentration solution passages 130 and 230, electricity may be generated at the first and second anode electrodes 101 and 201 and the first and second cathode electrodes 102 and 202 due to a difference in concentration between the high concentration solution and the low concentration solution which pass through the first ion exchange membrane 110 and the second ion exchange membrane 210.

That is, owing to a concentration difference between the low concentration solution and the high concentration solution, cations and anions contained in the high concentration solution selectively pass through the ion exchange membranes such that electricity may be generated.

Meanwhile, the separation part 400 of the present invention is defined as a space between facing surfaces of the first cathode electrode 102 and the second anode electrode 201 and includes one or more deionization passages 421 and one or more enrichment passages 422 through which a third high concentration solution flows.

More specifically, the separation part 400 of the present invention includes a plurality of third ion exchange membranes 410 for partitioning the deionization passage 421 and the enrichment passage 422.

Here, the third ion exchange membranes 410 include a plurality of cation exchange membranes 411 and a plurality of anion exchange membranes 412.

In particular, in the deionization passage 421 of the separation part 400, a deionization process is performed due to electricity generated in the first and second power generation parts 100 and 200.

More specifically, when the low concentration solution and the high concentration solution flow through the first and second low concentration solution passages 130 and 230 and the first and second high concentration solution passages 120 and 220, in the first power generation part 100 and the second power generation part 200, the low concentration solution and the high concentration solution pass through the first and second exchange membranes 110 and 210 due to a concentration difference between the low concentration solution and the high concentration solution so that electricity may be generated at the first and second anode electrodes 101 and 201 and the first and second cathode electrodes 102 and 202.

Owing to the electricity generated at the first cathode electrode 102 and the second anode electrode 201, an ionic material of the third high concentration solution moves to the first cathode electrode 102 and the second anode electrode 201, and deionization and enrichment may be performed in the deionization passage 421 and the enrichment passage 422.

That is, the ionic material may pass through the cation exchange membrane 411 and the anion exchange membrane 412 and move to the first cathode electrode 102 and the second anode electrode 201 to be deionized or enriched.

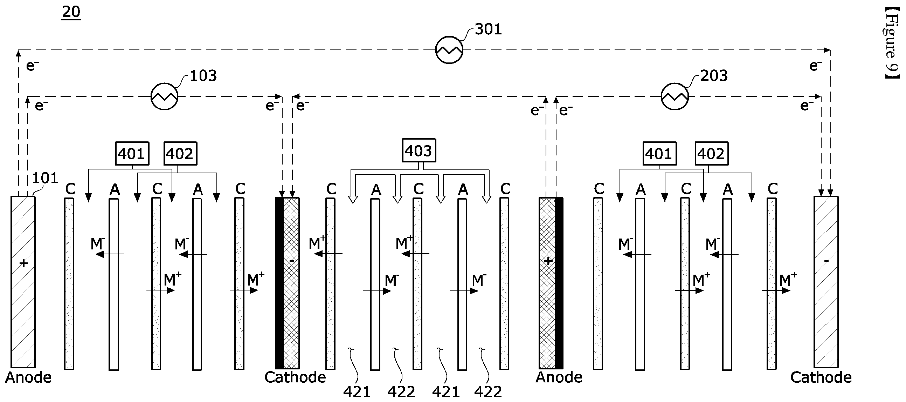

Referring to FIG. 9, a cationic material of the ionic material moves to the first cathode electrode 102, and an anionic material thereof moves to the second anode electrode 201 so that the separation part 400 in which the third high concentration solution flows may be divided into the deionization passage 421 and the enrichment passage 422.

More specifically, as the cationic material moves to the first cathode electrode 102 due to the electricity generated at the first cathode electrode 102 and the second anode electrode 201, the ionic material of the third high concentration solution introduced into the separation part 400 passes through the cation exchange membrane 411.

Simultaneously, as the anionic material moves to the second anode electrode 201, the ionic material of the third high concentration solution passes through the anion exchange membrane 412.

In this case, since the cationic material does not pass through the anion exchange membrane 412 and the anionic material does not pass through the cation exchange membrane 411, passages of the separation part partitioned by a third ion exchange membrane form the deionization passage 421 and the enrichment passage 422, and deionization, i.e., desalination, is performed in the deionization passage 421 to discharge brackish water or fresh water, and the enrichment passage 422 discharges enriched water.

Meanwhile, the first cathode electrodes 102 and 202 and the second anode electrode 201 of the present invention include first surfaces 102a and 201a and second surfaces 102b and 201b.

That is, the separation part 400 of the present invention may be defined as a space between facing surfaces 102a and 201a of the first cathode electrode 102 and the second anode electrode 201.

Here, the facing surfaces mean a first surface 102a of the first cathode electrode and a first surface 201a of the second anode electrode.

Thus, the separation part 400 may be defined as a space between the first surface 102a of the first cathode electrode and the first surface 201a of the second anode electrode.

More specifically, when the third high concentration solution flows, the separation part 400 may be provided such that the third high concentration solution comes into contact with the facing surfaces 102a and 201a of the first cathode electrode 102 and the second anode electrode 201.

Thus, when the third high concentration solution flows, the separation part 400 may be provided such that the third high concentration solution comes into contact with the first surface 102a of the first cathode electrode and the first surface 201a of the second anode electrode.

More specifically, when the third high concentration solution flows, the ionic material of the third high concentration solution may move toward the facing surfaces 102a and 201a of the first cathode electrode 102 and the second anode electrode 201.

Here, the ionic material may include a cationic material and an anionic material.

Further, the cationic material may pass through the first cathode electrode 102 to move, and the anionic material may pass through the second anode electrode 201 to move.

In particular, the ionic material is a dissolved material including salt contained in the third high concentration solution. For example, the cationic material may be a sodium ion (Na⁺), and the anionic material may be a chlorine ion (Cl⁻), but the present invention is not limited thereto.

Meanwhile, an electrode solution supplied to generate electricity in the first and second power generation parts 100 and 200 may include an electrolyte and any one of the low concentration solution and the high concentration solution. Preferably, electrode solutions on the second surfaces 102b and 201b of the first cathode electrode 102 and the second anode electrode 201 forming the separation part 400 also include an electrolyte and use fresh water, pure water, or an electrolytic solution having high ion conductivity.

Further, two surfaces of each of the first cathode electrode 102 and the second anode electrode 201, which face the power generation part and the separation part, may be formed of different materials.

Here, the first surface 102a of the first cathode electrode 102 faces the separation part 300, and the second surface 102b thereof faces the power generation part, i.e., the first power generation part 100.

Further, the first surface 201a of the second anode electrode 201 faces the separation part 300, and the second surface 201b thereof faces the power generation part, i.e., the second power generation part 200.

More specifically, in the first cathode electrode 102, the second surface 102b facing the first power generation part 100 and the first surface 102a facing the separation part 300 may be formed of different materials.

Further, in the second anode electrode 201, the second surface 201b facing the second power generation part 200 and the first surface 201a facing the separation part 300 may be formed of different materials.

Thus, the first surfaces 102a and 201a and the second surfaces 102b and 201b of the first cathode electrode 102 and the second anode electrode 201 may be formed of different materials.

Further, the first surfaces 102a and 201a of the first cathode electrode and the second anode electrode may be the above-described structure, and the second surfaces 102b and 201b thereof may be the above-described current collector.

Meanwhile, the present invention may further include a first supplier 401 for supplying one or more among discharge water, brackish water, fresh water, and a mixed solution including one or more thereof to the first and second low concentration solution passages 130 and 230.

Further, the present invention may further include a second supplier 402 for supplying one or more among seawater, brackish water, and a mixed solution including one or more thereof to the first and second high concentration solution passages 120 and 220.

Further, the present invention may further include a third supplier 403 for supplying one or more among seawater, brackish water, and a mixed solution including one or more thereof to the deionization passage 421 and the enrichment passage 422 of the separation part 400.

In particular, the present invention may further include first and second passages 140 and 240 for supplying a discharge solution, which is discharged from the deionization passage 421 and the enrichment passage 422, to the first and second low concentration solution passages 130 and 230 or the first and second high concentration solution passages 120 and 220.

In particular, the first passage 140 may be provided to be connected to the first and second low concentration solution passages 130 and 230 for allowing a fluid to flow so as to supply the discharge solution to the first power generation part, the second power generation part, or both of the first power generation part and the second power generation part.

Further, the first passage 240 may be provided to be connected to the first and second high concentration solution passages 120 and 220 for allowing a fluid to flow so as to supply the discharge solution to the first power generation part, the second power generation part, or both of the first power generation part and the second power generation part.

Here, the discharge solution is a discharge solution discharged from the deionization passage 421 and enrichment passage 422 and means a solution discharged from the deionization passage 421 and enrichment passage 422 after ions of the introduced high concentration solution pass through the ion exchange membrane so as to move to the electrodes.

That is, a first discharge solution which is a solution having a concentration that is lower than an introduced concentration may be discharged from the deionization passage 421, and a second discharge solution which is a solution having a concentration that is higher than the introduced concentration may be discharged from the enrichment passage 422.

When the first discharge solution and the second discharge solution are transferred to the first and second power generation parts 100 and 200, a concentration difference between the first discharge solution and the second discharge solution is greater than that between general seawater and fresh water so that an effect of re-using the discharged solutions and simultaneously recovering high energy can be obtained.

Further, when the first discharge solution and the second discharge solution are appropriately diluted to be introduced into the first and second power generation parts 100 and 200 as the low concentration solution, inner resistance between the ion exchange membranes is lowered so that an effect of increasing output can be obtained.

Further, the present invention may further include third and fourth passages (not shown) for supplying a power generation part discharge solution, which is discharged from the first and second low concentration solution passages 130 and 230 or the first and second high concentration solution passages 120 and 220 after electricity is generated, to the deionization passage 421 and the enrichment passage 422.

Here, when the high concentration solution and the low concentration solution flow through the plurality of first high concentration and first low concentration solution passages 120 and 130 and the second high concentration and second low concentration solution passages 220 and 230, the power generation part discharge solution means solutions discharged from the first and second high concentration solution passages 120 and 220 after electricity is generated from the first anode electrode 101, the first cathode electrode 102, the second anode electrode 201, and the second cathode electrode 202 due to a concentration difference while the high concentration solution and the low concentration solution pass through the cation exchange membranes 111 and 211 and the anion exchange membranes 112 and 212.

That is, since ions of the introduced high concentration solution pass through the ion exchange membrane to move to the low concentration solution, the discharge solution may be a diluted high concentration solution having a concentration that is lower than that of the introduced high concentration solution.

The diluted high concentration solution having a concentration that is lower than that of seawater is transferred to the separation part and then deionized such that an effect of improving efficiency of desalination can be obtained.

Meanwhile, the first cathode electrode 102 and the second anode electrode 201 of the present invention may be electrochemically connected.

Here, although the first cathode electrode 102 and the second anode electrode 201 are not electrically directly connected, a flow of electrons is generated due to movement of ions such that the first cathode electrode 102 and the second anode electrode 201 may be electrochemically connected.

Further, the first cathode electrode 102 may be electrically connected to the first anode electrode 101 via a first resistor 103, and the first resistor 103 may be provided to be adjustable in size.

Further, the second cathode electrode 202 may be electrically connected to the second anode electrode 201 via a second resistor 203, and the second resistor 203 may be provided to be adjustable in size.

In particular, the first anode electrode 101 may also be electrically connected to the second cathode electrode 202 via a third resistor 301.

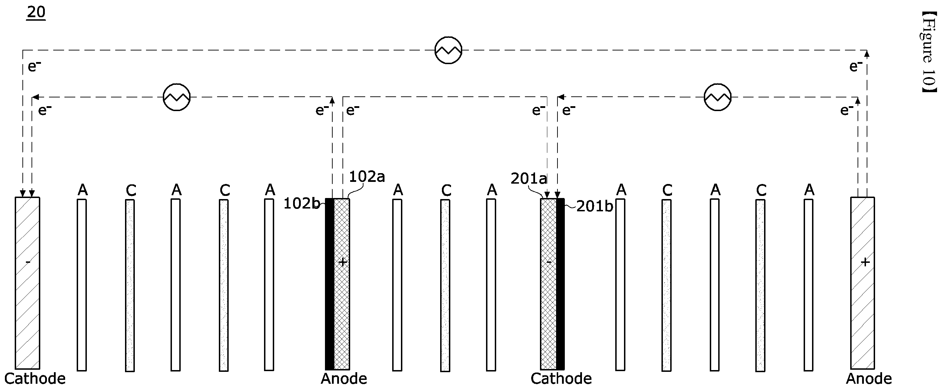

As shown in FIG. 10, the hybrid power generation apparatus 20 having the above configuration may include a form in which the cathode electrodes and the anode electrodes are inverted. In this case, an arrangement of the cation exchange membranes and the anion exchange membranes disposed between the cathode electrodes and the anode electrodes may also be appropriately changed.

For example, the inverted form means that the cathode electrode is changed to an anode electrode, the anode electrode is changed to a cathode electrode, the cation exchange membrane is changed to an anion exchange membrane, and the anion exchange membrane is changed to a cation exchange membrane.

Meanwhile, a process of simultaneously generating electricity and performing deionization using the hybrid power generation apparatus 20 having the above-described configuration will be described below.

In the following description, an example in which the first and second low concentration solutions and the first to third high concentration solutions are supplied from the corresponding suppliers will be described, However, as described above, the low concentration solution or the high concentration solution may be supplied using the first to fourth passages appropriately.

First, referring to FIG. 8 again, when the low concentration solution and the high concentration solution are introduced into the first and second power generation parts 100 and 200 through the first and second suppliers 401 and 402, a potential difference is generated due to a concentration difference between the low concentration solution and the high concentration solution.

Thus, a flow of electrons occurs in the first and second anode electrodes 101 and 201 and the first and second cathode electrodes 102 and 202.

The flow of the electrons means that a potential is applied to the separation part 400 which is defined as a space between the facing surfaces of the first cathode electrode 102 and the second anode electrode 201.

Accordingly, owing to the applied potential, an ionic material in the third high concentration solution passing through a third ion exchange membrane 410, which partitions the deionization passage 421 and the enrichment passage 422 of the separation part 400, moves to the facing surfaces of the first cathode electrode 102 and the second anode electrode 201.

In this case, the ionic material passes through the cation exchange membrane 411 and the anion exchange membrane 412, and an ionic material of the ionic materials, which does not pass through the cation exchange membrane 411 or the anion exchange membrane 412, moves to the enrichment passage 422 to be enriched such that the first discharge solution is discharged.

In this case, the deionization process is performed in the deionization passage 321 so that the deionized second discharge solution is discharged.

Since the separation part 400 of the hybrid power generation apparatus 20 configured as described above does not require an electrode for deionization, an effect of implementing a more compact apparatus can be obtained.

Further, since the potential applied to the separation part 400 is electricity generated in the first and second power generation parts 100 and 200, an effect of producing fresh water can be obtained without using additional energy.

Further, the anode electrodes and the cathode electrodes may be electrically connected via the first to third resistors 103, 203, and 301 to implement an independent electric circuit.

Therefore, since the potential applied to the separation part 400 may be consecutively supplied, the deionization process may be consecutively maintained and, simultaneously, parts such as the ion exchange membrane and the like requiring maintenance may be partially replaced without stopping the operation of the separation part 400.

In particular, since the first to third resistors 103, 203, and 301 are adjustable in size, resistance values of the first to third resistors 103, 203, and 301 are adjusted according to concentrations of the low concentration solution and the high concentration solution which are supplied to the hybrid power generation apparatus 10 such that an operating condition may be varied.

For example, when a concentration of the third high concentration solution supplied to the separation part 400 is high, resistance values of the first resistor 103 and the second resistor 203 may be increased so as to increase electrical energy transferred to the separation part 400.

Consequently, a movement speed of the ionic material contained in the third high concentration solution increases so that desalination may be performed rapidly.

Meanwhile, the present invention provides a hybrid power generation apparatus 21 according to an another example of the second embodiment in which a plurality of first and second power generation parts 100 and 200 described above are arranged. The hybrid power generation apparatus 21 may further improve efficiency of deionization.

That is, the hybrid power generation apparatus 11 according to another example of the second embodiment of the present invention may further improve efficiency of deionization by arranging the plurality of first and second power generation parts 100 and 200 which are described above.

Referring to FIGS. 10 and 11, the plurality of first power generation parts 100 and the plurality of second power generation parts 200 may be alternately arranged.

That is, the first power generation part 100 and the second power generation part 200 may be sequentially arranged, and then the first power generation part 100 and the second power generation part 200 may be sequentially arranged again.

In this case, when each deionization passage 421 is connected such that a fluid flows, a desalination effect may be improved.

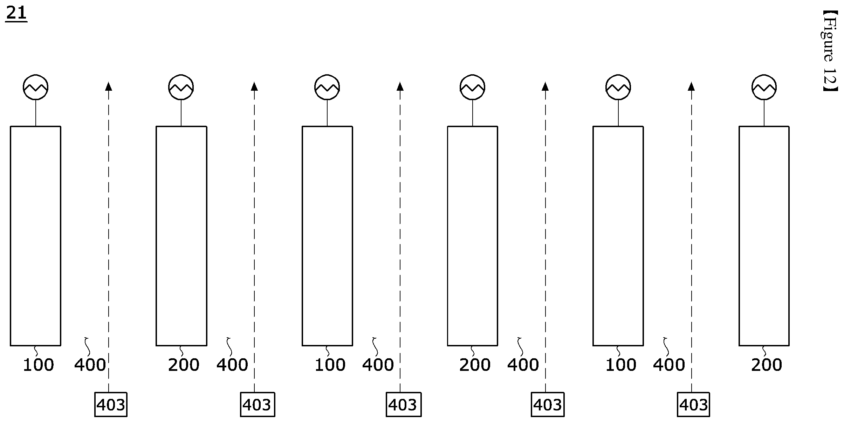

For example, as shown in FIG. 12, when about 3.5 wt% seawater is supplied to a third high concentration solution passage 420 of the separation part 400, since the supplied seawater passes a plurality of times through the deionization passage 421 and the enrichment passage 422, which are connected such that a fluid flows, deionization may be repeatedly performed to finally produce about 0.05 wt% fresh water in the deionization passage 421.

Further, since a higher enriched water may be discharged from the enrichment passage 422, when the higher enriched water is used as the high concentration solution of the first and second power generation parts 100 and 200, an effect of further improving efficiency of power generation can be obtained.

Further, as shown in FIG. 11, the third supplier 403 is connected to each separation part 400 so that a large amount of fresh water may be produced.

Meanwhile, a hybrid power generation apparatus 22 according to a still another example of the second embodiment of the present invention includes a carbon dioxide collector 1000 configured to collect carbon dioxide using a carbon dioxide absorbent and including an absorbent passage through which the absorbent absorbing the carbon dioxide is discharged.

Alternatively, the present invention includes the above-described hybrid power generation apparatus 20 or 21 and is implemented such that the absorbent passage and the first and second high concentration solution passages are connected such that a fluid flows so as to supply the absorbent absorbing carbon dioxide to the first and second high concentration solution passages of the hybrid power generation apparatus.

For example, the absorbent absorbing carbon dioxide may be a product generated through carbon dioxide absorption using an absorbent during a carbon capture storage (CCS) collection process.

Such a reaction may be expressed by the following Reaction Formula 1.

[Reaction Formula 1] Abs(absorbent)(aq) + CO₂(g) ↔ Abs⁺(aq) + HCO₃⁻(aq)

Carbonates (HCO₃⁻) contained in the absorbent move by passing through the anion exchange membranes in the first and second power generation parts of the hybrid power generation apparatus, and hydrogen (H⁺) ions move by passing through the cation exchange membranes to generate a potential difference such that electricity may be generated. Here, the hydrogen (H⁺) ions may be present in water (H₂O) included in a solvent of the absorbent.

It may also be provided a hybrid power generation method.

For example, the hybrid power generation method relates to a power generation method through the above-described hybrid power generation apparatuses 20, 21, and 22 according to the second embodiment.

Therefore, the above-described content may be equally applied to details of the hybrid power generation apparatus, which will be described below.

The hybrid power generation method includes supplying the high concentration solution and the low concentration solution to the first and second high concentration solution passages and the first and second low concentration solution passages of the first and second power generation parts according to the hybrid power generation apparatus.

The hybrid power generation method includes supplying the third high concentration solution to the deionization passage and the enrichment passage of the separation part.

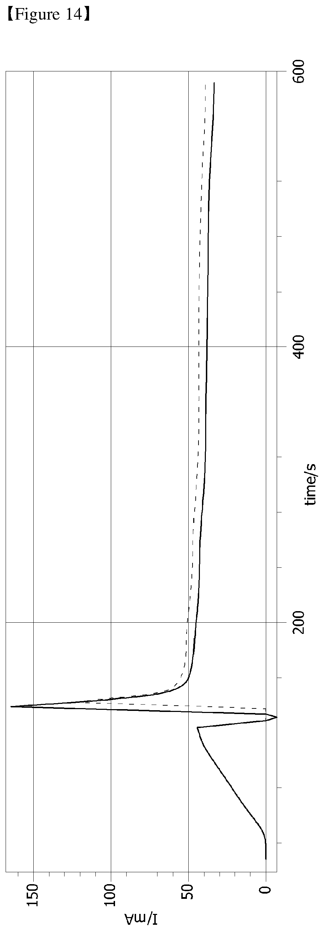

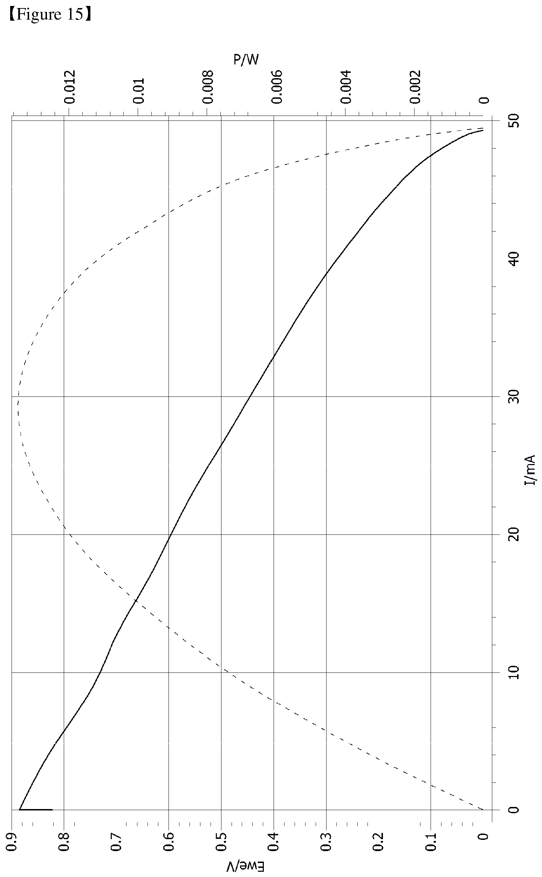

Meanwhile, FIGS. 14 and 15 are graphs showing a current intensity and a power density in a hybrid power generation apparatus according to one embodiment of the present invention.

In order to measure the current intensity and the power density, a hybrid power generation apparatus was manufactured by alternately arranging five cells, i.e., six cation exchange membranes and five anion exchange membranes, in each of a first RED part (a first power generation part) and a second RED part (a second power generation part) and arranging an anode electrode serving as a first electrode, a cathode electrode serving as a second electrode, an anode electrode serving as a third electrode, and a cathode electrode serving as a fourth electrode.

In this case, polarities of the electrodes are determined by an arrangement of the ion exchange membranes in the first and second RED parts. For example, when the cation exchange membranes are disposed between the electrodes and a high concentration solution (sea water or enriched water), the electrodes become cathode electrodes.

That is, when the cation exchange membranes and the anion exchange membranes are alternately sequentially arranged from the first electrode, and the high concentration solution is supplied between a cation exchange membrane and an anion exchange membrane which are adjacent to the first electrode between the first electrode and the second electrode, the first electrode becomes a cathode electrode.

On the contrary, when the anion exchange membranes are disposed between the electrodes and the high concentration solution (sea water or enriched water), the electrodes become anode electrodes.

That is, when the anion exchange membranes and the cation exchange membranes are alternately sequentially arranged from the first electrode, and the high concentration solution is supplied between an anion exchange membrane and a cation exchange membrane which are adjacent to the first electrode between the first electrode and the second electrode, the first electrode becomes an anode electrode.

Therefore, it is possible to change the polarities of the electrodes by changing the arrangement of the ion exchange membranes for the purpose of reaction or washing in a space portion.

In the present invention, the electrodes (the first to fourth electrodes) are made of platinum and iridium so that electrical conductivity and catalytic properties of the electrodes are very excellent. Further, although the cathode electrodes and the anode electrodes provided in the space portion are separated through the space portion, the cathode electrodes and the anode electrodes may be electrically connected by filling the space portion with a porous support or a filling material.

Seawater (3.0 wt% NaCl) and fresh water (0.1 wt% NaCl) are respectively supplied to the first and second RED parts at 10 mL/min as a high concentration solution and a low concentration solution, and a current intensity was measured by electrically connecting the first electrode to the fourth electrode and connecting the second electrode to the third electrode of the hybrid power generation apparatus.

As shown in FIG. 14, a graph indicated by a dotted line represents a current intensity between the first electrode and the fourth electrode, i.e., a current intensity in the first RED part and the second RED part (in an entirety of the hybrid power generation apparatus).

Further, a graph indicated by a solid line represents a current intensity between the second electrode and the third electrode, i.e., an intensity of a current flowing in the space portion between the first RED part and the second RED part.

That is, it was confirmed that electricity was generated due to a concentration difference between the solutions supplied to the first RED part and the second RED part which are connected in series and, simultaneously, a current flowed in the space portion. In particular, it was confirmed that a current similar to the intensity of the current flowing in the first RED part and the second RED part flowed in the space portion.

A graph shown in FIG. 15 represents a power density between the first electrode and the fourth electrode, i.e., a power density in the first RED part and the second RED part (in the entirety of the hybrid power generation apparatus).

As a result, it was confirmed that the power density of 0.4 W/m² per unit area of the ion exchange membrane was exhibited.

The measurement of the power density between the first electrode and the fourth electrode may be possible only when the space portion, i.e., the second and third electrodes are electrochemically connected.

Thus, it was confirmed that electricity was generated due to a concentration difference between the solutions supplied to the first RED part and the second RED part and, simultaneously, the space portion was electrochemically connected.

The above-described exemplary embodiments of the present invention are disclosed for the purpose of illustration, various alterations, modifications, and additions can be devised by those skilled in the art having various ordinary knowledge of the present invention as long as these alterations, modifications, and additions fall within the scope of the appended claims.

## Claims

1. A hybrid power generation apparatus (10) comprising:
a first RED (reverse electro dialysis) part (100) configured to generate electricity due to a concentration difference between a high concentration solution and a low concentration solution; and including a first electrode (101) and a second electrode (102) electrically connected to the first electrode (101); and
a second RED part (200) configured to generate electricity due to the concentration difference between the solutions and including a third electrode (201) disposed to face the second electrode (102) to form a space portion (300) between the third electrode (201) and the second electrode (102) and a fourth electrode (202) electrically connected to the third electrode (201),
wherein the space portion (300) includes one or more flow channels (310) through which a fluid is flowable, and when each of the first RED part (100) and the second RED part (200) generate the electricity, the first RED part (100) and the second RED part (200) are arranged such that a potential difference caused by the second electrode (102) and the third electrode (201) is applied to the space portion (300),
wherein at least one of the first RED part (100) and the second RED part (200) and the space portion (300) are connected such that a solution flowing in the flow channel (310) is supplied to at least one of the first RED part (100) and the second RED part (200) or are provided such that a solution discharged from at least one of the first RED part (100) and the second RED part (200) is supplied to the flow channel (310),
wherein, in the space portion (300), an ion exchange membrane (311, 312) is disposed adjacent to each of facing surfaces (102a, 201a) of the second electrode (102) and the third electrode (201),
wherein the space portion (300) is defined as a space between facing surfaces (102a) and (201a) of the second electrode (102) and the third electrode (103),
wherein the apparatus is configured such that one or more among saltwater, seawater, brackish water, and a mixed solution including one or more thereof are supplied to the space portion (300), and, when the potential difference is applied to the space portion (300), deionization is performed,
wherein the flow channel (310) is provided such that a flowing solution comes into contact with the facing surfaces (102a) and (201a) of the second electrode (102) and the third electrode (201), and
wherein the apparatus is configured such that when the low concentration solution and the high concentration solution are introduced into the first RED part (100) and second RED part (200), a potential difference is generated due to a concentration difference between the low concentration solution and the high concentration solution, and the potential is applied to the space portion (300).

2. The hybrid power generation apparatus of claim 1, wherein the space portion (300) includes the one or more flow channels (310) comparted by a cation exchange membrane (C) and an anion exchange membrane (A), configured such that the solution flows in each of two adjacent flow channels (310), and when a potential difference is applied to the space portion (300), deionization is performed in one flow channel of the two adjacent flow channels and enrichment is performed in the other flow channel thereof.

3. The hybrid power generation apparatus of claim 1, wherein the second electrode (102) and the third electrode (201) are provided to have the same polarity or different polarities.

4. The hybrid power generation apparatus of claim 1, wherein facing surfaces (102a, 201a) of the second electrode (102) and the third electrode (201) include porous electrode portions.

5. The hybrid power generation apparatus of claim 1, wherein facing surfaces (102a, 201a) of the second electrode (102) and the third electrode (201) are made of a different material from that of surfaces thereof opposite the facing surfaces (102a, 201a).

6. The hybrid power generation apparatus of claim 1, wherein the first electrode (101) and the second electrode (102) are connected via a first resistor (103), the third electrode (201) and the fourth electrode (202) are connected via a second resistor (203), and at least one of the first resistor (103) and the second resistor (203) is provided to be adjustable in size.

7. The hybrid power generation apparatus of claim 1, wherein the first RED part (100) and the second RED part (200) are respectively provided as a plurality of first RED parts and a plurality of second RED parts to be arranged.

8. A hybrid power generation apparatus (22) comprising:
a carbon dioxide collector (1000) configured to collect carbon dioxide using a carbon dioxide absorbent and including an absorbent passage through which the absorbent absorbing the carbon dioxide is discharged; and
the hybrid power generation apparatus (10) according to claim 1,
wherein the absorbent passage, the first RED part, and the second RED part are connected such that a fluid is flowable so as to supply the absorbent absorbing the carbon dioxide to at least one of the first RED part and the second RED part.

## Patentansprüche

1. Eine Hybridenergieerzeugungsvorrichtung (10), die Folgendes beinhaltet:
ein erstes UED(Umkehr-Elektro-Dialyse)-Teil (100), das konfiguriert ist, um Elektrizität aufgrund eines Konzentrationsunterschieds zwischen einer Lösung mit hoher Konzentration und einer Lösung mit niedriger Konzentration zu erzeugen; und das eine erste Elektrode (101) und eine zweite Elektrode (102), die mit der ersten Elektrode (101) elektrisch verbunden ist, umfasst; und
ein zweites UED-Teil (200), das konfiguriert ist, um Elektrizität aufgrund des Konzentrationsunterschieds zwischen den Lösungen zu erzeugen, und das eine dritte Elektrode (201), die angeordnet ist, um der zweiten Elektrode (102) gegenüberzuliegen,
um einen Abstandsabschnitt (300) zwischen der dritten Elektrode (201) und der zweiten Elektrode (102) zu bilden, und eine vierte Elektrode (202), die mit der dritten Elektrode (201) elektrisch verbunden ist, umfasst,
wobei der Abstandsabschnitt (300) einen oder mehrere Strömungskanäle (310) umfasst, durch die ein Fluid strömen kann, und, wenn jedes des ersten UED-Teils (100) und des zweiten UED-Teils (200) die Elektrizität erzeugen, das erste UED-Teil (100) und das zweite UED-Teil (200) so eingerichtet sind, dass eine Potentialdifferenz, die durch die zweite Elektrode (102) und die dritte Elektrode (201) verursacht wird, an den Abstandsabschnitt (300) angelegt wird,
wobei mindestens eines/einer von dem ersten UED-Teil (100) und dem zweiten UED-Teil (200) und dem Abstandsabschnitt (300) so verbunden sind, dass eine Lösung, die in dem Strömungskanal (310) strömt, mindestens einem von dem ersten UED-Teil (100) und dem zweiten UED-Teil (200) zugeführt wird, oder so bereitgestellt sind, dass eine Lösung, die aus mindestens einem von dem ersten UED-Teil (100) und dem zweiten UED-Teil (200) abgeleitet wird, dem Strömungskanal (310) zugeführt wird,
wobei in dem Abstandsabschnitt (300) eine lonenaustauschmembran (311, 312) benachbart zu jeder der gegenüberliegenden Oberflächen (102a, 201a) der zweiten Elektrode (102) und der dritten Elektrode (201) angeordnet ist,
wobei der Abstandsabschnitt (300) als ein Abstand zwischen gegenüberliegenden Oberflächen (102a) und (201a) der zweiten Elektrode (102) und der dritten Elektrode (103) definiert ist,
wobei die Vorrichtung so konfiguriert ist, dass eines oder mehrere von Salzwasser, Meereswasser, Brackwasser und einer gemischten Lösung, die eines oder mehrere davon umfasst, dem Abstandsabschnitt (300) zugeführt werden und, wenn die Potentialdifferenz an den Abstandsabschnitt (300) angelegt wird, eine Deionisierung durchgeführt wird,
wobei der Strömungskanal (310) so bereitgestellt ist, dass eine Strömungslösung mit den gegenüberliegenden Oberflächen (102a) und (201a) der zweiten Elektrode (102) und der dritten Elektrode (201) in Berührung kommt, und
wobei die Vorrichtung so konfiguriert ist, dass, wenn die Lösung mit niedriger Konzentration und die Lösung mit hoher Konzentration in das erste UED-Teil (100) und das zweite UED-Teil (200) eingeführt werden, aufgrund eines Konzentrationsunterschieds zwischen der Lösung mit niedriger Konzentration und der Lösung mit hoher Konzentration eine Potentialdifferenz erzeugt wird und das Potential an den Abstandsabschnitt (300) angelegt wird.

2. Hybridenergieerzeugungsvorrichtung gemäß Anspruch 1, wobei der Abstandsabschnitt (300) den einen oder die mehreren Strömungskanäle (310) umfasst, die durch eine Kationenaustauschmembran (C) und eine Anionenaustauschmembran (A) unterteilt sind und die so konfiguriert sind, dass die Lösung in jedem von zwei benachbarten Strömungskanälen (310) strömt, und, wenn eine Potentialdifferenz an den Abstandsabschnitt (300) angelegt wird, eine Deionisierung in einem Strömungskanal der zwei benachbarten Strömungskanäle durchgeführt wird und eine Anreicherung in dem anderen Strömungskanal davon durchgeführt wird.

3. Hybridenergieerzeugungsvorrichtung gemäß Anspruch 1, wobei die zweite Elektrode (102) und die dritte Elektrode (201) bereitgestellt sind, um dieselbe Polarität oder unterschiedliche Polaritäten aufzuweisen.

4. Hybridenergieerzeugungsvorrichtung gemäß Anspruch 1, wobei die gegenüberliegenden Oberflächen (102a, 201a) der zweiten Elektrode (102) und der dritten Elektrode (201) poröse Elektrodenabschnitte umfassen.

5. Hybridenergieerzeugungsvorrichtung gemäß Anspruch 1, wobei die gegenüberliegenden Oberflächen (102a, 201a) der zweiten Elektrode (102) und der dritten Elektrode (201) aus einem anderen Material hergestellt sind als dem der Oberflächen davon auf der anderen Seite der gegenüberliegenden Oberflächen (102a, 201a).

6. Hybridenergieerzeugungsvorrichtung gemäß Anspruch 1, wobei die erste Elektrode (101) und die zweite Elektrode (102) über einen ersten Widerstand (103) verbunden sind, die dritte Elektrode (201) und die vierte Elektrode (202) über einen zweiten Widerstand (203) verbunden sind und mindestens einer des ersten Widerstands (103) und des zweiten Widerstands (203) bereitgestellt ist, um größenverstellbar zu sein.

7. Hybridenergieerzeugungsvorrichtung gemäß Anspruch 1, wobei das erste UED-Teil (100) und das zweite UED-Teil (200) jeweils als eine Vielzahl von ersten UED-Teilen und eine Vielzahl von zweiten UED Teilen, die einzurichten sind, bereitgestellt sind.

8. Eine Hybridenergieerzeugungsvorrichtung (22), die Folgendes beinhaltet:
einen Kohlenstoffdioxidsammler (1000), der konfiguriert ist, um unter Verwendung eines Kohlenstoffdioxidabsorptionsmittels Kohlenstoffdioxid zu sammeln, und der einen Absorptionsmitteldurchgang umfasst, durch den das Absorptionsmittel, das das Kohlenstoffdioxid absorbiert, abgeleitet wird; und
die Hybridenergieerzeugungsvorrichtung (10) gemäß Anspruch 1,
wobei der Absorptionsmitteldurchgang, das erste UED-Teil und das zweite UED-Teil so verbunden sind, dass ein Fluid strömen kann, um das Absorptionsmittel, das das Kohlenstoffdioxid absorbiert, mindestens einem des ersten UED-Teils und des zweiten UED-Teils zuzuführen.

## Revendications

1. Un appareil de génération de puissance hybride (10) comprenant :
une première partie de RED (électrodialyse inverse) (100) configurée pour générer de l'électricité en raison d'une différence de concentration entre une solution à concentration élevée et une solution à concentration faible ; et incluant une première électrode (101) et une deuxième électrode (102) connectée électriquement à la première électrode (101) ; et
une deuxième partie de RED (200) configurée pour générer de l'électricité en raison de la différence de concentration entre les solutions et incluant une troisième électrode (201) disposée pour faire face à la deuxième électrode (102) afin de former une portion d'espace (300) entre la troisième électrode (201) et la deuxième électrode (102) et une quatrième électrode (202) connectée électriquement à la troisième électrode (201),
où la portion d'espace (300) inclut un ou plusieurs canaux d'écoulement (310) à travers lesquels un fluide peut s'écouler, et lorsque chaque partie parmi la première partie de RED (100) et la deuxième partie de RED (200) génère l'électricité, la première partie de RED (100) et la deuxième partie de RED (200) sont agencées de telle sorte qu'une différence de potentiel amenée par la deuxième électrode (102) et la troisième électrode (201) soit appliquée à la portion d'espace (300),
où au moins une partie parmi la première partie de RED (100) et la deuxième partie de RED (200) et la portion d'espace (300) sont connectées de telle sorte qu'une solution s'écoulant dans le canal d'écoulement (310) soit fournie à au moins une partie parmi la première partie de RED (100) et la deuxième partie de RED (200) ou sont prévues de telle sorte qu'une solution évacuée d'au moins une partie parmi la première partie de RED (100) et la deuxième partie de RED (200) soit fournie au canal d'écoulement (310),
où, dans la portion d'espace (300), une membrane échangeuse d'ions (311, 312) est disposée de façon adjacente à chacune des surfaces se faisant face (102a, 201a) de la deuxième électrode (102) et de la troisième électrode (201),
où la portion d'espace (300) est définie comme un espace entre des surfaces se faisant face (102a) et (201a) de la deuxième électrode (102) et de la troisième électrode (103), où l'appareil est configuré de telle sorte qu'un ou plusieurs éléments d'entre de l'eau salée, de l'eau de mer, de l'eau saumâtre, et une solution mélangée incluant une ou plusieurs de ces eaux soient fournis à la portion d'espace (300), et, lorsque la différence de potentiel est appliquée à la portion d'espace (300), une désionisation s'effectue,
où le canal d'écoulement (310) est prévu de telle sorte qu'une solution d'écoulement vienne en contact avec les surfaces se faisant face (102a) et (201a) de la deuxième électrode (102) et de la troisième électrode (201), et
où l'appareil est configuré de telle sorte que, lorsque la solution à concentration faible et la solution à concentration élevée sont introduites dans la première partie de RED (100) et la deuxième partie de RED (200), une différence de potentiel soit générée en raison d'une différence de concentration entre la solution à concentration faible et la solution à concentration élevée, et le potentiel est appliqué à la potion d'espace (300).

2. L'appareil de génération de puissance hybride de la revendication 1, où la portion d'espace (300) inclut les un ou plusieurs canaux d'écoulement (310) compartimentés par une membrane échangeuse de cations (C) et une membrane échangeuse d'anions (A), configurés de telle sorte que la solution s'écoule dans chacun de deux canaux d'écoulement adjacents (310), et lorsqu'une différence de potentiel est appliquée à la portion d'espace (300), une désionisation s'effectue dans un canal d'écoulement des deux canaux d'écoulement adjacents et un enrichissement s'effectue dans l'autre canal d'écoulement de ceux-ci.

3. L'appareil de génération de puissance hybride de la revendication 1, où la deuxième électrode (102) et la troisième électrode (201) sont prévues pour avoir la même polarité ou des polarités différentes.

4. L'appareil de génération de puissance hybride de la revendication 1, où des surfaces se faisant face (102a, 201a) de la deuxième électrode (102) et de la troisième électrode (201) incluent des portions d'électrode poreuses.

5. L'appareil de génération de puissance hybride de la revendication 1, où des surfaces se faisant face (102a, 201a) de la deuxième électrode (102) et de la troisième électrode (201) sont faites d'un matériau différent de celui de surfaces de celles-ci opposées aux surfaces se faisant face (102a, 201a).

6. L'appareil de génération de puissance hybride de la revendication 1, où la première électrode (101) et la deuxième électrode (102) sont connectées par le biais d'une première résistance (103), la troisième électrode (201) et la quatrième électrode (202) sont connectées par le biais d'une deuxième résistance (203), et au moins une résistance parmi la première résistance (103) et la deuxième résistance (203) est prévue pour être de taille ajustable.

7. L'appareil de génération de puissance hybride de la revendication 1, où la première partie de RED (100) et la deuxième partie de RED (200) sont prévues respectivement comme une pluralité de premières parties de RED et une pluralité de deuxièmes parties de RED devant être agencées.

8. Un appareil de génération de puissance hybride (22) comprenant :
un collecteur de dioxyde de carbone (1000) configuré pour collecter du dioxyde de carbone à l'aide d'un produit absorbant le dioxyde de carbone et incluant un passage de produit absorbant à travers lequel le produit absorbant qui absorbe le dioxyde de carbone est évacué ; et
l'appareil de génération de puissance hybride (10) selon la revendication 1,
où le passage de produit absorbant, la première partie de RED, et la deuxième partie de RED sont connectés de telle sorte qu'un fluide puisse s'écouler de façon à fournir le produit absorbant qui absorbe le dioxyde de carbone à au moins une partie parmi la première partie de RED et la deuxième partie de RED.
